# EUROPEAN PATENT APPLICATION

(11) **EP 2 891 948 A1**
(43) Date of publication of application: **08.07.2015**
(21) Application number: 13832197.1
(22) Date of filing: 27.08.2013
(51) Int. Cl.: G06F 3/01, G06F 3/048

(54) **ELECTRONIC APPARATUS, CONTROL METHOD THEREOF, AND PROGRAM**

(30) Priority: 28.08.2012 JP 2012187866
(71) Applicant: NEC CASIO Mobile Communications, Ltd., Kawasaki-shi Kanagawa 211-8666 (JP)
(72) Inventor: KATOU, Yumi, Kawasaki-shi Kanagawa 211-8666 (JP); SUGAHARA, Seiji, Tokyo 140-0002 (JP)
(74) Representative: Vossius & Partner Patentanwälte Rechtsanwälte mbB
(86) International application number: PCT/JP2013/072847
(87) International publication number: WO 2014/034653

(57) **Abstract**

An electronic apparatus includes a display unit, a position detection unit, a sensory stimulation unit, and a control unit. The display unit includes a display surface that displays a 3D image. The position detection unit detects, as an object depth, a position of an object with respect to the display surface. The sensory stimulation unit stimulates a user's sense. The control unit controls the sensory stimulation unit on the basis of an image depth that indicates a stereoscopic position of at least one display object obtained from the 3D image and the object depth.

## Description

### [Technical Field]

### (Reference to Related Application)

This application is based upon and claims the benefit of the priority of Japanese Patent Application No. 2012-187866 filed on August 28, 2012, the disclosure of which is incorporated herein in its entirety by reference thereto.

The present invention relates to an electronic apparatus, a control method thereof, and a program. In particular, it relates to an electronic apparatus that displays three-dimensional (3D) images (a stereoscopic image), a control method of the electronic apparatus, and a program.

### [Background]

Recent years have seen an increasing use of electronic apparatuses that can display 3D images. In particular, for example, more and more stationary televisions that can display 3D images have been made available. There are also mobile electronic apparatuses such as mobile phones that can display 3D images.

In addition, there are mobile electronic apparatuses that can vibrate a housing thereof to vibrate a hand holding the housing.

Patent Literature (PTL) 1 discloses a device that vibrates a hand holding the device on the basis of an image being displayed. The hand-held electronic device disclosed in PTL 1 includes a touch screen (a display screen) around which a plurality of tactile pixels are arranged. Depending on the content displayed, the device moves (for example, vibrates or moves up and down) these tactile pixels. PTL 1 discloses that, if the hand-held electronic device is configured to be used as a game device, the device changes a state of one or more tactile pixels in response to a game event. PTL 1 also discloses that certain tactile pixels may vibrate with greater amplitude when scrolling on the touch screen reaches an end point and that the user is notified of a scrolling position in coordination with a tactile pixel position.

PTL 2 discloses a technique for applying resistive force to a joystick for performing a scroll operation on the basis of the altitude difference in a map on a display screen. Namely, PTL 2 discloses a technique for stimulating a user's tactile sense on the basis of 3D information.

### [Citation List]

### [Patent Literature]

[PTL1]
   Japanese Patent Kohyo Publication No. JP2011-510403A
[PTL 2]
   Japanese Patent Kokai Publication No. JP2004-226301A

### [Summary]

### [Technical Problem]

The disclosures of the above PTLs 1 and 2 are incorporated herein by reference thereto. The following analysis has been made by the present inventors.

PTL 1 is directed to two-dimensional images, not to 3D images. In addition, according to the technique disclosed in PTL 2, resistive force applied to the joystick is changed merely on the basis of positional information obtained from a map displayed on the display screen. The technique is not for stimulating the user's tactile sense on the basis of a 3D image.

The techniques disclosed in PTLs 1 and 2 cannot realize an electronic apparatus that stimulates a user's sense on the basis of a 3D image display mode. Namely, the techniques disclosed in PTLs 1 and 2 cannot allow the user to recognize that a 3D image certainly exists. The 3D image display mode is a display mode in which the user actually experiences a feeling when the user touches a 3D image outputted by an electronic apparatus. Namely, in the 3D image display mode, the user can actually feel a display content and feel that an image is protruding (or dented) from the display surface.

Thus, an electronic apparatus, a control method thereof, and a program that contribute to stimulating a user's sense on the basis of a 3D image are demanded.

### [Solution to Problem]

According to a first aspect of the present invention, there is provided an electronic apparatus, including: a display unit that includes a display surface which displays a three-dimensional (3D) image; a position detection unit that detects, as an object depth, a position of an object with respect to the display surface; a sensory stimulation unit that stimulates a sense of a user; and a control unit that controls the sensory stimulation unit on the basis of an image depth which indicates a stereoscopic position of at least one display object obtained from the 3D image and the object depth.

According to a second aspect of the present invention, there is provided a control method of an electronic apparatus including a display unit which includes a display surface that displays a three-dimensional (3D) image and a sensory stimulation unit which stimulates a sense of a user, the control method including: a position detection step of detecting, as an object depth, a position of an object with respect to the display surface; and a step of controlling the sensory stimulation unit on the basis of an image depth that indicates a stereoscopic position of at least one display object obtained from the 3D image and the object depth. This method is associated with a certain apparatus, namely, with the electronic apparatus including the display unit and the sensory stimulation unit.

According to a third aspect of the present invention, there is provided a program, causing a computer controlling an electronic apparatus including a display unit which includes a display surface that displays a three-dimensional (3D) image and a sensory stimulation unit which stimulates a sense of a user to perform: position detection processing for detecting, as an object depth, a position of an object with respect to the display surface; and processing for controlling the sensory stimulation unit on the basis of an image depth that indicates a stereoscopic position of at least one display object obtained from the 3D image and the object depth.
The program can be recorded in a computer-readable storage medium. The storage medium may be a non-transient storage medium such as a semiconductor memory, a hard disk, a magnetic recording medium, or an optical recording medium. The present invention can be embodied as a computer program product.

### [Advantageous Effects of Invention]

The above aspects of the present invention provide an electronic apparatus, a control method thereof, and a program that contribute to stimulating a user's sense on the basis of a 3D image.

### [Brief Description of Drawings]

[Fig. 1]

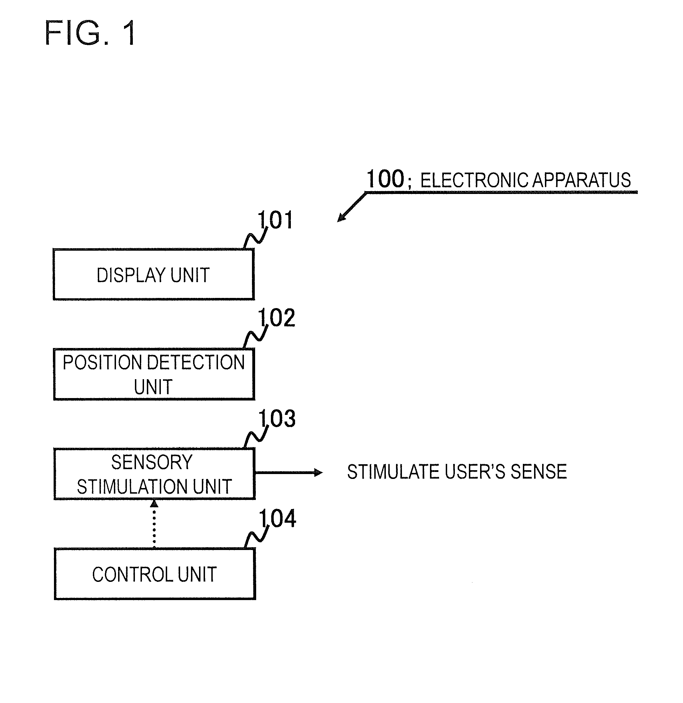

   Fig. 1 is a diagram for illustrating an outline of an exemplary embodiment.
[Fig. 2]

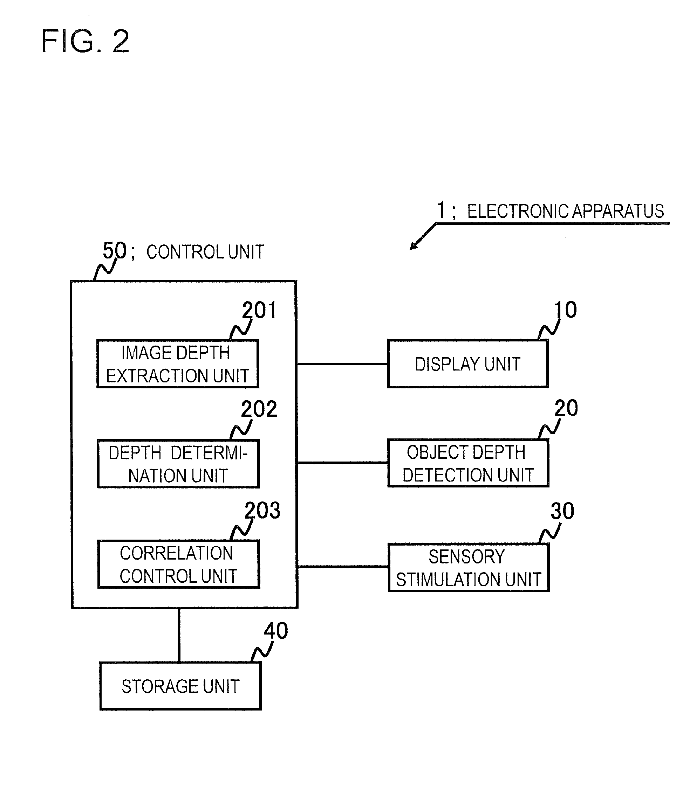

   Fig. 2 illustrates an internal configuration of an electronic apparatus 1 according to a first exemplary embodiment.
[Fig. 3]

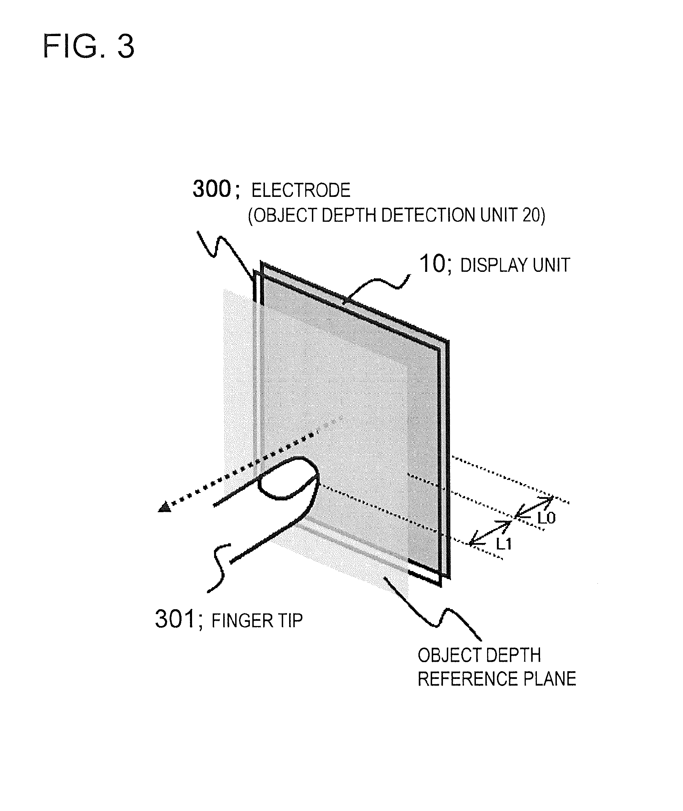

   Fig. 3 is a diagram for illustrating an object depth and an image depth.
[Fig. 4]

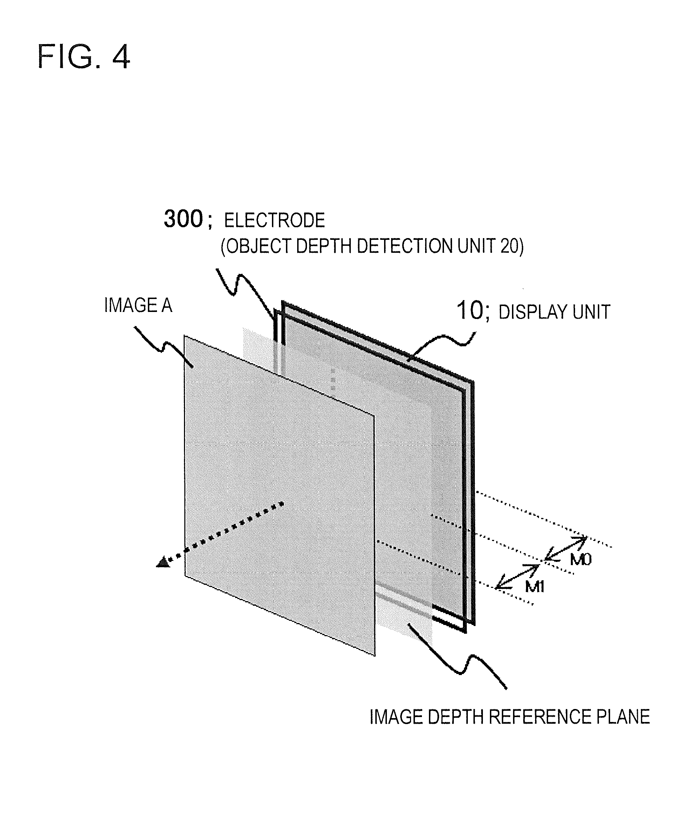

   Fig. 4 is a diagram for illustrating an object depth and an image depth.
[Fig. 5]

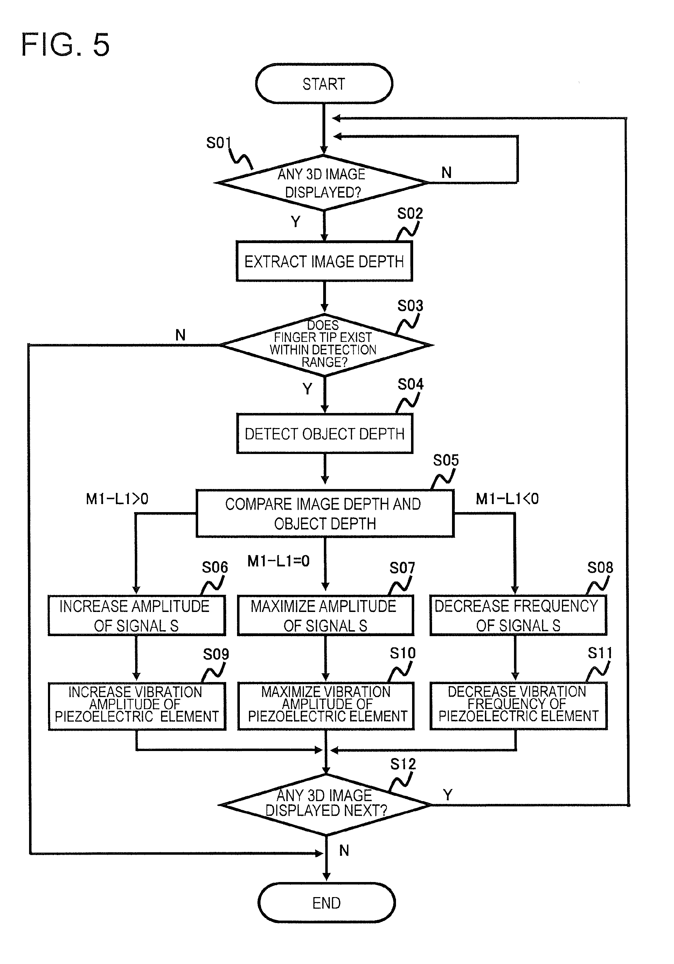

   Fig. 5 is a flowchart illustrating an operation of the electronic apparatus 1.
[Fig. 6]

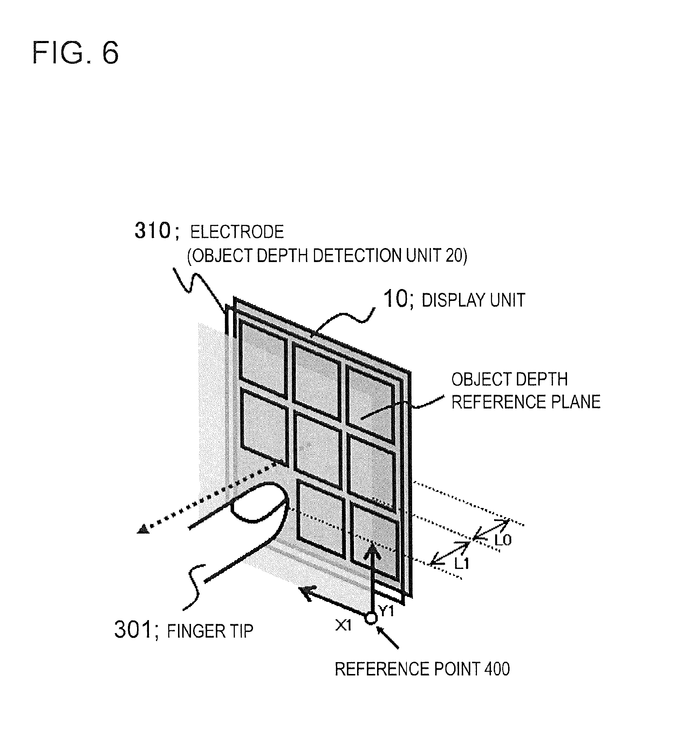

   Fig. 6 is a diagram for illustrating an object depth and an image depth according to a second exemplary embodiment.
[Fig. 7]

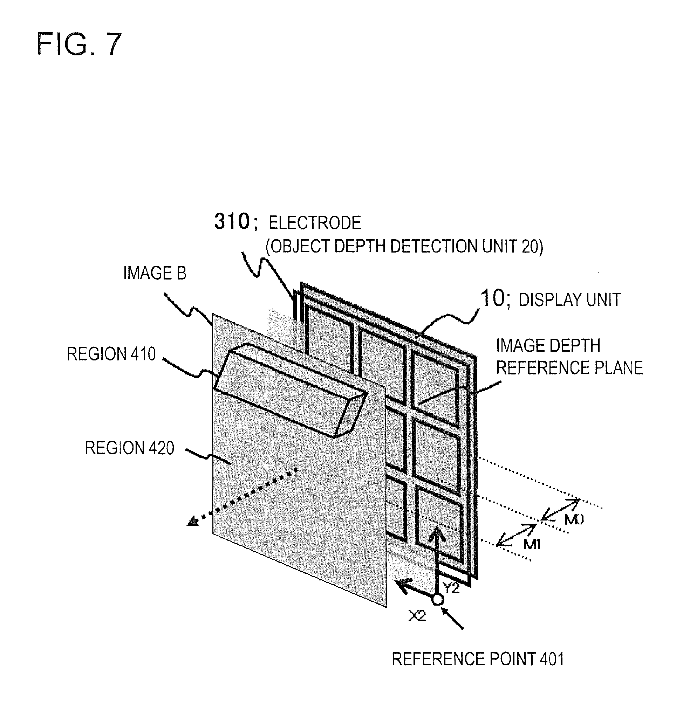

   Fig. 7 is a diagram for illustrating an object depth and an image depth according to the second exemplary embodiment.

### [Description of Embodiments]

First, an outline of an exemplary embodiment will be described with reference to Fig. 1. In the following outline, various components are denoted by reference characters for the sake of convenience. Namely, the following reference characters are merely used as examples to facilitate understanding of the present invention. The description of the outline is not intended to place any limitations on the present invention.

As described above, the techniques disclosed in PTLs 1 and 2 cannot realize an electronic apparatus that stimulates a user's sense on the basis of a three-dimensional (3D) image. This is because the positional relationship between a position in the depth direction when the user views a 3D image and a finger tip that the user uses to touch the 3D image cannot be defined (determined) according to these techniques.

Thus, to solve this problem, for example, an electronic apparatus 100 illustrated in Fig. 1 is provided. The electronic apparatus 100 includes a display unit 101, a position detection unit 102, a sensory stimulation unit 103, and a control unit 104. The display unit 101 includes a display surface that displays a 3D image. The position detection unit 102 detects, as an object depth, a position of an object with respect to the display surface. The sensory stimulation unit 103 stimulates a user's sense. The control unit 104 controls the sensory stimulation unit on the basis of an image depth that indicates a stereoscopic position of at least one display object obtained from the 3D image and the object depth.

The electronic apparatus 100 defines a position of a 3D image viewed by the user as an image depth and defines a position of an object such as a user's finger tip as an object depth. The electronic apparatus 100 uses the sensory stimulation unit 103 and the control unit 104 to stimulate a sense (for example, the tactile sense) of the user operating the electronic apparatus 100 on the basis of the image depth and the object depth. As a result, on the basis of the display position of the 3D image and the position of the object such as a finger tip, the electronic apparatus 100 can allow the user to feel as if the user is touching a 3D virtual object. Conventionally, when a mobile electronic apparatus or the like that has a limited display surface area is used, it is difficult for the user to promptly recognize the position of an object displayed as a 3D image. However, with the electronic apparatus 100, since the user's tactile sense or the like is stimulated, the user can actually recognize the position of the object.

Hereinafter, specific embodiments will be described in detail with reference the drawings.

### [First exemplary embodiment]

A first exemplary embodiment will be described in detail with reference the drawings.

Fig. 2 illustrates an internal configuration of an electronic apparatus 1 according to the present exemplary embodiment. While the electronic apparatus 1 according to the present exemplary embodiment will be described as a mobile phone, the electronic apparatus 1 is not limited to a mobile phone. For example, the electronic apparatus 1 may be an arbitrary electronic apparatus such as a mobile phone, a smartphone, a game console, a tablet PC (Personal Computer), a laptop PC, or a PDA (Personal Data Assistants; mobile information terminal).

The electronic apparatus 1 includes a display unit 10, an object depth detection unit 20, a sensory stimulation unit 30, a storage unit 40, and a control unit 50. For simplicity, Fig. 2 mainly illustrates modules relating to the electronic apparatus 1 according to the present exemplary embodiment.

The display unit 10 can display a 3D image and includes a display device such as a liquid crystal panel. The display unit 10 receives an image signal corresponding to a 3D image generated by the control unit 50 and provides a 3D image to the user on the basis of the received image signal. An arbitrary method may be used to reproduce the 3D image. For example, the user may wear glasses including a liquid-crystal shutter to view the 3D image or the user may directly view the 3D image without any glasses. Examples of the 3D image displayed by the display unit 10 include a still image and a moving image.

The display unit 10 displays various images. The display unit 10 can display not only an image that corresponds to 3D display but also an image that does not correspond to 3D display. When displaying a 3D image, the user viewing the 3D image recognizes that the image is displayed at a position different from the position of the display surface in the normal direction of the display surface of the display unit 10. In the present exemplary embodiment, the position where the user viewing the 3D image perceives the 3D image is the display position of the image.

The object depth detection unit 20 detects the position of a conductor that exists in a direction (normal direction) perpendicular to the display surface of the display unit 10. The object depth detection unit 20 corresponds to the above position detection unit 102. The object depth detection unit 20 includes a projection-type capacitance detection sensor, for example. When a conductor (for example, a part of a human body such as a finger tip) is brought close to an electrode (an electrode 300 which will be described below), the object depth detection unit 20 calculates the distance between the display surface and the conductor on the basis of change in the capacitance that changes depending on the distance between the electrode and the conductor.

The object depth detection unit 20 may use a distance sensor such as an infrared sensor to detect the position of the object (conductor) from the display surface of the display unit 10. Alternatively, if the electronic apparatus 1 includes a camera function, the object depth detection unit 20 may estimate the positional relationship between the display surface and the conductor by performing image processing on an image in which the conductor is captured.

Since a main function of the object depth detection unit 20 is to detect the positional relationship between the display surface of the display unit 10 and the conductor, the electronic apparatus 1 additionally needs an operation unit (not illustrated) including a touch panel or the like. The touch panel included in the operation unit may be manufactured as a combination of the display unit 10 such as a liquid crystal panel, a touch sensor, and the like. Alternatively, the touch panel may be manufactured integrally. Namely, the detection method, the configuration, etc. of the touch panel are not limited.

The sensory stimulation unit 30 stimulates the tactile sense of the user by applying a vibration or pressure to a user's hand holding the housing of the electronic apparatus 1. For example, the sensory stimulation unit 30 includes a piezoelectric element (including a MEMS (Micro Electro Mechanical Systems) device), a device such as a vibration motor that vibrates the hand holding the electronic apparatus 1, or a device that applies pressure to the hand by using a spring or the like. The following description will be made assuming that the sensory stimulation unit 30 includes a piezoelectric element. However, a device included in the sensory stimulation unit 30 is not limited to a piezoelectric element.

The sensory stimulation unit 30 receives a signal S from the control unit 50 and controls the piezoelectric element on the basis of the signal S. The sensory stimulation unit 30 may stimulate a different sense of the user other the tactile sense. For example, the sensory stimulation unit 30 may stimulate the auditory sense by using voice or the like.

For example, the storage unit 40 stores information necessary for operations of the electronic apparatus 1 and 3D images provided to the user.

The control 1 unit 50 comprehensively controls the electronic apparatus 1 and controls each unit illustrated in Fig. 2. The following description will be made assuming that the user operates the electronic apparatus 1 by using a finger different from the fingers of the hand holding the electronic apparatus 1.

Next, the object depth and the image depth will be described in detail.

Figs. 3 and 4 are diagrams for illustrating an object depth and an image depth. The object depth and the image depth of an image A illustrated in Fig. 4 will be described with reference to Figs. 3 and 4.

As illustrated in Fig. 3, the object depth detection unit 20 virtually sets a reference plane, which is used as a reference when a conductor position is detected, at a position away from the electrode 300 arranged on the display surface of the display unit 10 by distance L0 in the normal direction of the display surface. The conductor position in the normal direction from this reference plane is used as the object depth, and the above reference plane is used as an object depth reference plane.

In Fig. 3, a finger tip 301 (an input device) serving as a conductor exists at a position away from the object depth reference plane by distance L1. The object depth detection unit 20 calculates distance L1 + L0 on the basis of change in the capacitance that changes depending on the distance between the electrode 300 and the finger tip 301 serving as a conductor. Next, by subtracting the distance L0 from the distance L1 + L0, the object depth detection unit 20 detects the object depth of the finger tip 301. Namely, the object depth detection unit 20 determines the distance L1 to be the object depth of the finger tip 301. If the object depth detection unit 20 sets the distance L0 corresponding to the position of the object depth reference plane to 0 (L0 = 0), the display surface of the display unit 10 substantially matches the position of the object depth reference plane.

Next, the image depth will be described.

The image depth of a display object is an index that indicates how much protrusion of the display object from the reference plane is recognized by the user.

3D images are stored in advance in the storage unit 40 of the electronic apparatus 1. When creating a content including 3D images, a designer of the electronic apparatus 1 adds an image depth to each image in advance. In this operation, as illustrated in Fig. 4, to define the protrusion amount from the display surface of the display unit 10, the designer virtually sets a plane that is parallel to the display surface and is away from the display surface by distance M0 in the normal direction as a reference plane. The display position of an image in the normal direction from the reference plane (the position viewed by the user) is determined to be the image depth of the image and the above reference plane is determined to be an image depth reference plane. In Fig. 4, the position (the protrusion amount) that the user feels that the image A displayed by the display unit 10 is displayed is away from the image depth reference plane by distance M1. Thus, the image depth of the image A is the distance M1. As can be clear from the above description, the farther the image A is from the image depth reference plane, the larger the image depth M1 will be.

More specifically, an image depth is added as follows. If the designer uses the image depth reference plane as the reference and wishes the user to recognize that a 3D image is displayed on the same plane as the reference plane, the designer sets the image depth of the image to 0. In addition, an image-depth maximum value is determined by the range in which the object depth detection unit 20 can detect a conductor. For example, if the conductor position detection capability of the object depth detection unit 20 is distance L3 and if the designer wishes to protrude and display an image at a position corresponding to the distance L3, the designer sets the image depth to a maximum value. The distance L3 can be obtained from the specifications of a device(s) used in the object depth detection unit 20 and is a value that can be grasped by the designer of the electronic apparatus 1 in advance. An image-depth minimum value is determined by how much depth from the image depth reference plane the designer wishes to add to a 3D image to be displayed.

In this way, the designer of the electronic apparatus 1 determines and adds an image depth per 3D image on the basis of how the designer wishes the user to recognize each 3D image. Each 3D image with an image depth is stored in the storage unit 40.

Next, the control unit 50 will be described.

The control unit 50 illustrated in Fig. 2 includes an image depth extraction unit 201, a depth determination unit 202, and a correlation control unit 203.

The control unit 50 generates a 3D image to be displayed by the display unit 10 and supplies an image signal to the display unit 10.

The image depth extraction unit 201 reads a 3D image from the storage unit 40 and extracts an image depth M1 added to the 3D image.

The depth determination unit 202 compares the image depth M1 with an object depth L1 obtained by the object depth detection unit 20 to determine the user operation. More specifically, from the result of the comparison between the image depth M1 and the object depth L1, the depth determination unit 202 determines which one of the following three cases corresponds to the user operation. The three cases are a case in which the finger tip 301 is brought closer to the image A from a side opposite to the display unit 10 in the direction of the display surface, a case in which the user feels that the finger tip 301 is touching the image A (the finger tip 301 is into contact with the image A in a pseudo manner), and a case in which the finger tip 301 passes through the image A and is brought closer to the display surface.

Hereinafter, the case in which the finger tip 301 is brought closer to the image A from the side opposite to the display unit 10 in the direction of the display surface will be referred to as case A. The case in which the user feels that the finger tip 301 is touching the image A will be referred to as case B. The case in which the finger tip 301 passes through the image A and is brought closer to the display surface will be referred to as case C.

The relationship between the image depth M1 and the object depth L1 in each case is as follows:
In case A, image depth M1 - object depth L1 > 0
In case B, image depth M1 - object depth L1
In case C, image depth M1 - object depth L1 < 0

The correlation control unit 203 changes the signal S that is transmitted to the sensory stimulation unit 30 on the basis of the determination result obtained by the depth determination unit 202. For example, if the signal S that is transmitted from the correlation control unit 203 to the sensory stimulation unit 30 is a sine wave having a predetermined direct-current (DC) component, the correlation control unit 203 changes the frequency and amplitude of the sine wave.

For example, the correlation control unit 203 changes the signal S as follows.

In case A, as the absolute value between the image depth M1 and the object depth L1 decreases (as the difference between the image depth M1 and the object depth L1 reaches close to 0), the correlation control unit 203 increases the amplitude of the signal S. However, in this case, the frequency of the signal S is maintained.

In case B, the correlation control unit 203 sets the amplitude of the signal S to a maximum value.

In case C, as the absolute value between the image depth M1 and the object depth L1 increases, the correlation control unit 203 changes the frequency while maintaining the amplitude of the signal S at the maximum value.

In case A, when the sensory stimulation unit 30 receives the signal S from the correlation control unit 203, as the absolute value between the image depth M1 and the object depth L1 decreases, the sensory stimulation unit 30 increases the vibration amplitude of the piezoelectric element. In case B, the sensory stimulation unit 30 sets the vibration amplitude of the piezoelectric element to a maximum value. In case C, the sensory stimulation unit 30 changes the vibration frequency while maintaining the vibration amplitude of the piezoelectric element at the maximum value.

Next, an operation of the electronic apparatus 1 according to the present exemplary embodiment will be described.

Fig. 5 is a flowchart illustrating an operation of the electronic apparatus 1.

In step S01, the control unit 50 determines whether a 3D image (for example, the image A) is being displayed by the display unit 10. If the image A is not being displayed (No in step S01), the control unit 50 repeats step S01 until the image A is displayed. If the 3D image is displayed (Yes in step S01), the image depth extraction unit 201 extracts the image depth M1 from the displayed 3D image (step S02).

In step S03, the object depth detection unit 20 determines whether the finger tip 301 exists within the detection range of the object depth detection unit 20. The detection range of the object depth detection unit 20 is determined by the structure of the electrode 300 (the thickness, the material, the capacitance of a capacitor connected in parallel with the electrode, etc.). If the finger tip 301 does not exist within the detection range (No in step S03), no signal S is transmitted to the correlation control unit 203, and the object depth detection unit 20 ends the present processing.

If the finger tip 301 exists within the detection range (Yes in step S03), the object depth detection unit 20 detects the object depth L1 of the finger tip 301 (step S04). Namely, the object depth detection unit 20 detects the object depth L1, which is the distance between the object depth reference plane and the finger tip 301. The object depth L1 is at a maximum level when the finger tip 301 is brought close to the display surface and enters the detection range. However, the object depth L1 decreases as the finger tip 301 is brought closer to the display surface.

In step S05, the depth determination unit 202 compares the image depth M1 and the object depth L1. On the basis of the comparison result, the depth determination unit 202 performs different processing. On the basis of the value of the image depth M1 and the value of the object depth L1, the depth determination unit 202 determines which one of the cases A to C corresponds to the positional relationship between the image depth M1 and the object depth L1. Depending on the determination result, the depth determination unit 202 performs different processing. More specifically, the depth determination unit 202 calculates the difference between the image depth M1 and the object depth L1 and determines whether the difference is "positive," "0," or "negative." Depending on the determination result, the depth determination unit 202 performs different processing.

Depending on the case, the correlation control unit 203 changes the amplitude or the frequency of the signal S that is transmitted to the sensory stimulation unit 30. More specifically, if the determination result obtained by the depth determination unit 202 is "positive" (image depth M1 - object depth L1 > 0; case A), the correlation control unit 203 sets the signal S so that the amplitude of the signal S is at a minimum level when the object depth L1 is at the maximum level. The correlation control unit 203 increases the amplitude of the signal S as the absolute value between the image depth M1 and the object depth L1 decreases (step S06). In this case, the frequency of the signal S is maintained.

If the determination result obtained by the depth determination unit 202 is "0" (image depth M1 - object depth L1 = 0; case B), the correlation control unit 203 sets the amplitude of the signal S to the maximal value (step S07). The relationship that image depth M1 - object depth L1 = 0 is satisfied when the image depth M1 and the object depth L1 substantially match.

If the determination result obtained by the depth determination unit 202 is "negative" (image depth M1 - object depth L1 < 0; case C), the correlation control unit 203 decreases the frequency of the signal S as the absolute value between the image depth M1 and the object depth L1 decreases. In this case, the amplitude of the signal S is maintained at the maximal value. In each case, the signal S is outputted to the sensory stimulation unit 30.

In steps S09 to S11, the sensory stimulation unit 30 controls the internal piezoelectric element on the basis of the signal S.

More specifically, in step S09, the sensory stimulation unit 30 controls the piezoelectric element so that the piezoelectric element vibrates least when the object depth L1 is the maximum value and so that the piezoelectric element vibrates more as the absolute value between the image depth M1 and the object depth L1 decreases. Namely, the vibration amount applied when the object depth L1 is the maximum value is a minimum vibration amount that the user's hand holding the electronic apparatus 1 can feel. In this case, the vibration frequency is maintained.

In step S10, the sensory stimulation unit 30 controls the piezoelectric element so that the vibration amount is increased to a maximum level.

In step S11, the sensory stimulation unit 30 controls the piezoelectric element so that the vibration frequency decreases as the absolute value between the image depth M1 and the object depth L1 increases. In this case, the vibration amplitude is maintained.

After steps S09 to S11, the control unit 50 determines whether a 3D image different from the 3D image that has already been displayed exists (step S12).

If the next 3D image exists (Yes in step S12), the operation returns to step S01 and the control unit 50 continues the processing. In contrast, if the control unit 50 determines that the next 3D image does not exist (No in step S12), the control unit 50 ends the processing illustrated in Fig. 5.

If the object depth reference plane and the image depth reference plane are set on the display surface (the surface of the electrode 300) of the display unit 10 (if the distance L0 = 0 and the distance M0 = 0), the finger tip 301 does not passes through the display surface (the object depth reference plane). Thus, when the object depth L1 of the finger tip 301 is 0, if the protrusion amount of the image A (namely, the image depth M1 of the image A) is determined, the vibration amount and frequency applied to the user' tactile sense are determined.

Thus, an example in which a finger tip of a hand different from the hand holding the electronic apparatus 1 is brought closer to the display unit 10 of the electronic apparatus 1 has been described. However, of course, the same advantageous effects can also be obtained when a finger tip of the hand holding the electronic apparatus 1 is brought closer to the display unit 10. In addition, while the finger tip 301 is used as an example of the conductor that is brought closer to the electronic apparatus 1 in the above description, the conductor is not limited to a finger tip. Other than a finger tip, an arbitrary object that can change the capacitance of the electrode 300 may be used. For example, a stylus pen having a pen tip serving as a conductor may be used. In addition, if the object depth detection unit 20 includes a distance sensor or the like, the object that is brought closer to the display surface may be an object other than a conductor. Namely, an object detected by the electronic apparatus 1 is not limited to a conductor.

The combinations of the vibration amplitude and the vibration frequency of the piezoelectric element when the difference between the image depth M1 and the object depth L1 is positive," "0," or "negative" are not limited to the above description. For example, when image depth M1 - object depth L1 > 0 (case A), the vibration amplitude of the piezoelectric element may be set to 0. When image depth M1 - object depth L1 = 0 (case B), the piezoelectric element may be vibrated at a predetermined vibration amplitude and vibration frequency. In addition, the piezoelectric element may be configured to maintain the same vibration amplitude as that in the case B when image depth M1 - object depth L1 < 0 (case C) and to decrease the vibration frequency as the absolute value between the image depth M1 and the object depth L1 increases. Alternatively, only when image depth M1 - object depth L1 = 0 (case B), the piezoelectric element may be configured to vibrate at a predetermined vibration amplitude and vibration frequency. Further alternatively, the piezoelectric element may be configured to change the vibration frequency while maintaining the vibration amplitude in case A and case B and to change the vibration amplitude while maintaining the vibration frequency in case C. In this way, various combinations of the vibration amplitude and the vibration frequency of the piezoelectric element are possible when image depth M1 - object depth L1 is "positive," "0," or "negative."

In addition, in the above description, the electronic apparatus 1 uses a piezoelectric element as means for stimulating the user's tactile sense to allow the user to recognize the presence of the image A. However, other means may be used. For example, if the electronic apparatus 1 includes a speaker, voice can be used to stimulate the user's auditory sense, thereby allowing the user to recognize the presence of the image A.

As described above, in the electronic apparatus 1 according to the present exemplary embodiment, the sensory stimulation unit 30 controls the stimulation applied to the user on the basis of the image depth that indicates a stereoscopic position of at least one display object obtained from a 3D image and the object depth of an object brought closer to the display surface included in the display unit 10. Namely, by using the sensory stimulation unit 30, the electronic apparatus 1 can give a user's hand a feeling that a finger tip is touching the image A. In addition, the electronic apparatus 1 can stimulate the tactile sense of the hand holding the electronic apparatus 1 on the basis of the relative depth between the user's finger tip and the 3D image. As a result, the user can intuitively recognize that the image the user is viewing certainly exists at the displayed position (depth). Since the user can intuitively feel the position of the image, without watching the display screen closely, the user can recognize the presence of the image through the vibration applied to his/her hand.

### [Second exemplary embodiment]

Next, a second exemplary embodiment will be described in detail with reference to the drawings.

An electronic apparatus 2 according to the present exemplary embodiment has the same internal configuration as that of the electronic apparatus 1 according to the first exemplary embodiment. Thus, the description that corresponds to Fig. 2 will be omitted. The electronic apparatus 2 differs from the electronic apparatus 1 in the structure of the electrode included in the object depth detection unit 20. An electrode 310 included in the object depth detection unit 20 of the electronic apparatus 2 is divided into a plurality of sections. By dividing the electrode 310 into a plurality of sections, the coordinates of the position of the finger tip 301 on the display surface can be detected. If the object depth detection unit 20 includes the electrode 310 divided into a plurality of sections, the object depth detection unit 20 also serves as a touch panel (an operation unit) that receives user operations.

In the first exemplary embodiment, a case in which the image A evenly protrudes from the surface of the display unit 10 has been described. In the present exemplary embodiment, a case in which a 3D image has irregularity will be described.

Figs. 6 and 7 are diagrams for illustrating an object depth and an image depth according to the second exemplary embodiment.

The electronic apparatus 2 processes an image having irregularity such as a 3D image B illustrated in Fig. 7. The image B illustrated in Fig. 7 is an image having a region 410 that is protruding from a region 420. The electronic apparatus 2 differs from the electronic apparatus 1 in that the electronic apparatus 2 obtains a relative in-plane position of the finger tip 301 with respect to the regions 410 and 420 in the image B.

As illustrated in Figs. 6 and 7, the electrode 310 is divided into a plurality of sections in a plane, and the object depth detection unit 20 detects the object depth L1 of the finger tip 301 on the basis of change in the capacitance of the plurality of electrode sections. In addition, an X1-axis and a Y1-axis are defined on the object depth reference plane illustrated in Fig. 6. By previously defining the coordinate position of each electrode section on the coordinate axes formed by these two axes, the in-plane position of the finger tip 301 can be calculated from the position of the electrode section(s) whose capacitance has changed.

In contrast, an X2-axis and a Y2-axis are defined on the image depth reference plane illustrated in Fig. 7. Information about the positions of the regions 410 and 420 in the image B on the coordinate axes formed by these two axes can be grasped in advance. This is because the image B is an image prepared when the electronic apparatus 2 is designed and is an image prepared by a designer of the electronic apparatus 2. By matching the position of a reference point 400 of the X1Y1 coordinate axes and the position of a reference point 401 of the X2Y2 coordinate axes, the relative in-plane position of the finger tip 301 with respect to the regions 410 and 420 in the image B can be calculated.

In this way, by dividing the electrode 310 into a plurality of sections, even if the image B includes regions each having a different image depth, the electronic apparatus 2 can stimulate the hand holding the electronic apparatus 2 on the basis of a region-specific image depth. The above description has been made assuming that the electrode 310 includes a plurality of electrode sections on the display unit 10. However, alternatively, the display unit 10 may be provided with a touch sensor capable of detecting a position on the display screen, in addition to the electrode 300 illustrated in Figs. 3 and 4. In such case, for example, a capacitance-type or resistance-type touch sensor can be used as the position detection touch sensor, and the position detection touch sensor and the electrode 300 including the object depth detection unit 20 are stacked.

### [Variations]

As described above, an image displayed by the electronic apparatus 2 is not limited to a flat image that does not have a thickness. For example, a stereoscopic object having a cubic shape, a spherical shape, or a cylindrical shape can be displayed. When displaying such a stereoscopic object, the electronic apparatus 2 can set two virtual planes: one plane that the user first touches when the user brings the finger tip 301 closer to the display surface of the display unit 10 and the other plane that the finger tip 301 touches after passing through the stereoscopic object. Namely, the relationship between the user's finger tip and the virtually-displayed stereoscopic object changes as follows.

First, the finger tip 301 of the user is brought close to the stereoscopic object and the finger tip 301 touches the near-side plane seen from the user. Next, if the user brings the finger tip 301 closer to the display unit 10, the finger tip 301 enters the stereoscopic object. Next, the finger tip 301 passes through the stereoscopic object. More specifically, the finger tip 301 reaches the other plane opposite to the near-side plane and passes through the stereoscopic object.

In such case, if there is only one means for stimulating the user's sense, it may be difficult to notify the user of the change of the above state. This is because the piezoelectric element included in the sensory stimulation unit 30 can change two kinds of parameters, i.e., the magnitude and the frequency of the vibration. However, if the electronic apparatus 1 or 2 includes a plurality of piezoelectric elements, the user can be notified of the change of the state caused when the finger tip 301 passes through the stereoscopic object by using the plurality of piezoelectric elements.

If the electronic apparatus 2 includes two piezoelectric elements and if these two piezoelectric elements are arranged to vibrate the housing of the electronic apparatus 2 in two directions, i.e., up and down and right and left, respectively, the correlation control unit 203 can perform the following control operation on the basis of the object depth and the image depth.

First, as the finger tip 301 of the user is brought close to the display surface of the display unit 10, the correlation control unit 203 increases the vibration amplitude of the piezoelectric element that vibrates the housing right and left. When the finger tip 301 touches the near-side plane, the correlation control unit 203 maximizes this right-and-left vibration amount. Next, if the finger tip 301 further proceeds through the stereoscopic object, the correlation control unit 203 increases the vibration amplitude of the piezoelectric element that vibrates the housing up and down. When the finger tip 301 reaches the plane opposite to the near-side plane, the correlation control unit 203 maximizes this up-and-down vibration amount. If the finger tip 301 passes through the plane opposite to the near-side plane, the correlation control unit 203 decreases the vibration frequency of each of the two piezoelectric elements.

Alternatively, if the electronic apparatus 2 includes two piezoelectric elements, the following control operation is also possible. For example, a stimulation change point can be set inside a display image such as a spherical shape or a cubic shape. The stimulation change point can be set at the center point of the image, for example. The center point of the image can be set at the geometric center point of the image to be displayed. Namely, the intersection of a vertical plane that extends through the midpoint of a rightmost point and a leftmost point in the horizontal display range of a stereoscopic object or the like, a horizontal plane that extends though the midpoint of an uppermost point and a lowermost point in the vertical display range, and a plane that extends through the midpoint of a nearest point and a farthest point in the virtual depth direction and that is parallel to the display unit can be set as the center point. However, the stimulation change point is not limited to such geometric center point. An arbitrary value determined depending on each stereoscopic object to be displayed may be used.

If the finger tip 301 moves vertically and horizontally with respect to such stimulation change point, when the finger tip 301 reaches the stimulation change point, the correlation control unit 203 maximizes the amplitude(s) of the piezoelectric element(s). As the finger tip 301 moves horizontally and vertically, the correlation control unit 203 controls the amplitudes of the two piezoelectric elements. For example, the correlation control unit 203 decreases the vibration amplitude as the finger tip 301 moves away from the stimulation change point. When the finger tip 301 moves out from the stereoscopic object, the correlation control unit 203 stops the vibration.

In addition, when the finger tip 301 moves toward (or away from) the display unit 10, the correlation control unit 203 maximizes the vibration frequency of each of the two piezoelectric elements at the stimulation change point. As the finger tip 301 moves away from the stimulation change point, the correlation control unit 203 decreases the vibration frequency.

In this way, if the electronic apparatus 2 includes two piezoelectric elements, the user can be notified of where the finger tip 301 exists with respect to a stereoscopic object on the basis of the vibration amount and the frequency of each of the two piezoelectric elements.

Part or all of the above exemplary embodiments can be described as follows. However, the present invention is not limited to the following modes.

### [Mode 1]

See the electronic apparatus according to the above first aspect.

### [Mode 2]

The electronic apparatus according to mode 1;
wherein the position detection unit detects, as the object depth, a position of an object in a normal direction of the display surface.

### [Mode 3]

The electronic apparatus according to mode 1 or 2;
wherein the image depth is a value that is previously added to the 3D image and that indicates a distance from a predetermined reference plane to the image as a protruding or dented object viewed by the user; and
wherein the control unit includes an image depth extraction unit that extracts the image depth form the 3D image.

### [Mode 4]

The electronic apparatus according to any one of modes 1 to 3; wherein the control unit includes:
a depth determination unit that compares the image depth and the object depth; and
a correlation control unit that controls the stimulation applied to the sense of the user by the sensory stimulation unit on the basis of a comparison result obtained by the depth determination unit.

### [Mode 5]

The electronic apparatus according to mode 4;
wherein the sensory stimulation unit includes a piezoelectric element capable of changing at least one of a vibration amplitude and a vibration frequency; and
wherein the correlation control unit changes at least one of the vibration amplitude and the vibration frequency of the piezoelectric element on the basis of the comparison result.

### [Mode 6]

The electronic apparatus according to mode 5;
wherein, when the image depth and the object depth match, the correlation control unit maximizes at least one of the vibration amplitude and the vibration frequency.

### [Mode 7]

The electronic apparatus according to mode 5;
wherein, when the image depth and the object depth match, the correlation control unit vibrates the piezoelectric element.

### [Mode 8]

The electronic apparatus according to any one of modes 4 to 7;
wherein the correlation control unit controls the stimulation applied to the user on the basis of a position of the display object on the display surface, the image depth of the display object, a position of the object on the display surface, and the object depth of the object.

### [Mode 9]

The electronic apparatus according to any one of modes 4 to 8;
wherein the correlation control unit changes the stimulation applied to the user by the sensory stimulation unit on the basis of a stimulation change point defined inside a stereoscopic object obtained from the 3D image.

### [Mode 10]

See the control method of the electronic apparatus according to the above second aspect.

### [Mode 11]

The control method of the electronic apparatus according to mode 10; wherein, in the position detection step, a position of an object in a normal direction of the display surface is detected as the object depth.

### [Mode 12]

The control method of the electronic apparatus according to mode 10 or 11;
wherein the image depth is a value that is previously added to the 3D image and that indicates a distance from a predetermined reference plane to the image as a protruding or dented object viewed by the user; and
wherein the control method includes an image depth extraction step of extracting the image depth form the 3D image.

### [Mode 13]

The control method of the electronic apparatus according to any one of modes 10 to 12;
wherein the control method includes:
a depth determination step of comparing the image depth and the object depth; and
a correlation control step of controlling the stimulation applied to the sense of the user by the sensory stimulation unit on the basis of a comparison result obtained in the depth determination step.

### [Mode 14]

The control method of the electronic apparatus according to mode 13; wherein the sensory stimulation unit includes a piezoelectric element capable of changing at least one of a vibration amplitude and a vibration frequency; and
wherein, in the correlation control step, at least one of the vibration amplitude and the vibration frequency of the piezoelectric element is changed on the basis of the comparison result.

### [Mode 15]

The control method of the electronic apparatus according to mode 14; wherein, when the image depth and the object depth match, at least one of the vibration amplitude and the vibration frequency is maximized in the correlation control step.

### [Mode 16]

The control method of the electronic apparatus according to mode 14; wherein, when the image depth and the object depth match, the piezoelectric element is vibrated in the correlation control step.

### [Mode 17]

The control method of the electronic apparatus according to any one of modes 10 to 16;
wherein, in the correlation control step, the stimulation applied to the user is controlled on the basis of a position of the display object on the display surface, the image depth of the display object, a position of the object on the display surface, and the object depth of the object.

### [Mode 18]

The control method of the electronic apparatus according to any one of modes 13 to 17;
wherein, in the correlation control step, the stimulation applied to the user by the sensory stimulation unit is changed on the basis of a stimulation change point defined inside a stereoscopic object obtained from the 3D image.

### [Mode 19]

See the program according to the above third aspect.

### [Mode 20]

The program according to mode 19;
wherein, in the position detection processing, a position of an object in a normal direction of the display surface is detected as the object depth.

### [Mode 21]

The program according to mode 19 or 20;
wherein the image depth is a value that is previously added to the 3D image and that indicates a distance from a predetermined reference plane to the image as a protruding or dented object viewed by the user; and
wherein the program causes the computer to perform image depth extraction processing for extracting the image depth form the 3D image.

### [Mode 22]

The program according to any one of modes 19 to 21;
wherein the program causes the computer to perform:
depth determination processing for comparing the image depth and the object depth; and
correlation control processing for controlling the stimulation applied to the sense of the user by the sensory stimulation unit on the basis of a comparison result obtained in the depth determination step.

### [Mode 23]

The program according to mode 22;
wherein the sensory stimulation unit includes a piezoelectric element capable of changing at least one of a vibration amplitude and a vibration frequency; and
wherein, in the correlation control processing, at least one of the vibration amplitude and the vibration frequency of the piezoelectric element is changed on the basis of the comparison result.

### [Mode 24]

The program according to mode 23;
wherein, when the image depth and the object depth match, at least one of the vibration amplitude and the vibration frequency is maximized in the correlation control processing.

### [Mode 25]

The program according to mode 23;
wherein, when the image depth and the object depth match, the piezoelectric element is vibrated in the correlation control processing.

### [Mode 26]

The program according to any one of modes 19 to 25;
wherein, in the correlation control processing, the stimulation applied to the user is controlled on the basis of a position of the display object on the display surface, the image depth of the display object, a position of the object on the display surface, and the object depth of the object.

### [Mode 27]

The program according to any one of modes 19 to 26;
wherein, in the correlation control processing, the stimulation applied to the user by the sensory stimulation unit is changed on the basis of a stimulation change point defined inside a stereoscopic object obtained from the 3D image.

### [Mode 28]

A processing apparatus, including:
a display means that displays a stereoscopic image used for stereoscopic viewing;
a position detection means that detects a position of an indication means with respect to the display means;
a notification means that gives a notification by using a physical vibration; and
a control means that controls the notification given by the notification means on the basis of a positional relationship between a stereoscopic position of at least one display object included in the stereoscopic image and a position of the indication means.

### [Mode 29]

A mobile terminal capable of displaying a three-dimensional (3D) image on a display screen, the mobile terminal including:
an input reception unit that receives, when an input device is brought close to the display screen, an input operation and acquire an input position in a normal direction of the display screen;
an image display position depth calculation unit that obtains a relative depth position of a 3D image displayed on the display screen with respect to the display screen; and
a provision unit that outputs a vibration or force on the basis of a correlation between an input position in the normal direction of the display screen and a display position of the 3D image.

### [Mode 30]

The mobile terminal according to mode 29, further including:
a determination unit that compares the input position in the normal direction of the display screen and the depth position of the 3D image.

### [Mode 31]

The mobile terminal according to mode 29 or 30;
wherein at least one of a vibration amplitude and a vibration frequency of the provision unit is changed on the basis of the relative position between the input position in the normal direction of the display screen and the depth position of the 3D image.

### [Mode 32]

The mobile terminal according to mode 31;
wherein, when the input position in the normal direction of the display screen and the depth position of the 3D image match, at least one of the vibration amplitude and the vibration frequency of the provision unit is maximized.

### [Mode 33]

The mobile terminal according to mode 29;
wherein, when the input position in the normal direction of the display screen and the depth position of the 3D image match, the provision unit vibrates.

### [Mode 34]

The mobile terminal according to any one of modes 29 to 33;
wherein at least one of the vibration amplitude and the vibration frequency of the provision unit is changed on the basis of the relative position between an in-plane position on the display screen and an in-plane position of the 3D image.

The disclosure of each of the above PTLs and the like is incorporated herein by reference thereto. Modifications and adjustments of the exemplary embodiments and the examples are possible within the scope of the overall disclosure (including the claims) of the present invention and based on the basic technical concept of the present invention. In addition, various combinations and selections of various disclosed elements (including the elements in each of the claims, exemplary embodiments, examples, drawings, etc.) are possible within the scope of the claims of the present invention. Namely, the present invention of course includes various variations and modifications that could be made by those skilled in the art according to the overall disclosure including the claims and the technical concept. In particular, the present description discloses numerical value ranges. However, even if the description does not particularly disclose arbitrary numerical values or small ranges included in the ranges, these values and ranges should be deemed to have been specifically disclosed.

### [Reference Signs List]

- 1, 2, 100: electronic apparatus
- 10, 101: display unit
- 20: object depth detection unit
- 30, 103: sensory stimulation unit
- 40: storage unit
- 50, 104: control unit
- 102: position detection unit
- 201: image depth extraction unit
- 202: depth determination unit
- 203: correlation control unit
- 300, 310: electrode
- 301: finger tip
- 400, 401: reference point
- 410, 420: region

## Claims

1. An electronic apparatus, comprising:
a display unit that includes a display surface which displays a three-dimensional (3D) image;
a position detection unit that detects, as an object depth, a position of an object with respect to the display surface;
a sensory stimulation unit that stimulates a sense of a user; and
a control unit that controls the sensory stimulation unit on the basis of an image depth which indicates a stereoscopic position of at least one display object obtained from the 3D image and the object depth.

2. The electronic apparatus according to claim 1;
wherein the position detection unit detects, as the object depth, a position of an object in a normal direction of the display surface.

3. The electronic apparatus according to claim 1 or 2;
wherein the image depth is a value that is previously added to the 3D image and that indicates a distance from a predetermined reference plane to the image as a protruding or dented object viewed by the user; and
wherein the control unit comprises an image depth extraction unit that extracts the image depth form the 3D image.

4. The electronic apparatus according to any one of claims 1 to 3;
wherein the control unit comprises:
a depth determination unit that compares the image depth and the object depth; and
a correlation control unit that controls the stimulation applied to the sense of the user by the sensory stimulation unit on the basis of a comparison result obtained by the depth determination unit.

5. The electronic apparatus according to claim 4;
wherein the sensory stimulation unit comprises a piezoelectric element capable of changing at least one of a vibration amplitude and a vibration frequency; and
wherein the correlation control unit changes at least one of the vibration amplitude and the vibration frequency of the piezoelectric element on the basis of the comparison result.

6. The electronic apparatus according to claim 5;
wherein, when the image depth and the object depth match, the correlation control unit maximizes at least one of the vibration amplitude and the vibration frequency.

7. The electronic apparatus according to claim 5;
wherein, when the image depth and the object depth match, the correlation control unit vibrates the piezoelectric element.

8. The electronic apparatus according to any one of claims 4 to 7;
wherein the correlation control unit controls the stimulation applied to the user on the basis of a position of the display object on the display surface, the image depth of the display object, a position of the object on the display surface, and the object depth of the object.

9. A control method of an electronic apparatus including a display unit which includes a display surface that displays a three-dimensional (3D) image and a sensory stimulation unit which stimulates a sense of a user, the control method comprising:
a position detection step of detecting, as an object depth, a position of an object with respect to the display surface; and
a step of controlling the sensory stimulation unit on the basis of an image depth that indicates a stereoscopic position of at least one display object obtained from the 3D image and the object depth.

10. A program, causing a computer controlling an electronic apparatus including a display unit which includes a display surface that displays a three-dimensional (3D) image and a sensory stimulation unit which stimulates a sense of a user to perform:
position detection processing for detecting, as an object depth, a position of an object with respect to the display surface; and
processing for controlling the sensory stimulation unit on the basis of an image depth that indicates a stereoscopic position of at least one display object obtained from the 3D image and the object depth.
